**Europäisches Patentamt**

**European Patent Office**

**Office européen des brevets**

(19)

(11) Veröffentlichungsnummer: **0 120 405**
**B1**

(12) # EUROPÄISCHE PATENTSCHRIFT

(45) Veröffentlichungstag der Patentschrift:
**24.06.87**

(51) Int. Cl.⁴: **H 05 B 41/232**

(21) Anmeldenummer: **84102749.3**

(22) Anmeldetag: **14.03.84**

(54) Zündvorrichtung für eine Niederdruckentladungslampe.

(30) Priorität: 28.03.83 DE 3311215

(43) Veröffentlichungstag der Anmeldung:
**03.10.84 Patentblatt 84/40**

(45) Bekanntmachung des Hinweises auf die Patenterteilung:
**24.06.87 Patentblatt 87/26**

(84) Benannte Vertragsstaaten:
**AT CH DE FR GB IT LI**

(56) Entgegenhaltungen:
**DE - A - 3 047 289**
**GB - A - 1 326 808**

**C.H. STURM "Vorschaltgeräte und Schaltungen für Niederspannungsentladungslampen", 5. Auflage, 1974, Brown, Boveri & Cie, AG MAnnheim, Seite 343**

(73) Patentinhaber: **Patent-Treuhand-Gesellschaft für elektrische Glühlampen mbH, Hellabrunner Strasse 1, D-8000 München 90 (DE)**

(72) Erfinder: **Fähnrich, Hans Jürgen, Dipl.-Ing., Hofheimer Strasse 11, D-8000 München (DE)**
Erfinder: **Roll, Ulrich, Dr. Dipl.-Phys., Adamstrasse 5, D-8000 München (DE)**

## Beschreibung

Die Erfindung betrifft eine Zündvorrichtung für eine Niederdruckentladungslampe, bei der parallel zur Lampe und in Reihe zu den vorheizbaren Elektroden ein Triac angeschlossen ist, dessen Steuerelektrodenanschluss über einen Diac und einen dazu in Reihe liegenden Ladewiderstand an den Mittenabgriff eines ebenfalls parallel zur Lampe verlaufenden Spannungsteilers geführt ist, und der Diac ausserdem über einen Triggerkondensator mit dem Hauptelektrodenanschluss des Triacs verbunden ist.

Bei der obigen Schaltungsanordnung handelt es sich um eine Schaltung zur Phasenanschnittsteuerung, wobei der Spannungsteiler üblicherweise aus einem regelbaren Widerstand und einem Kondensator besteht. Eine solche Grundschaltung wird in vielfältig abgewandelten Formen zum Steuern von Haushalts- und auch industriellen Geräten verwendet.

In der DE-OS 3 047 289 dient eine abgewandelte Form dieser Grundschaltung zum Zünden von Niederdruckentladungslampen mit niedrigen Startspannungen. Diese Schaltungsanordnung weist im Spannungsteiler neben einem Ladewiderstand und einem Triggerkondensator zusätzlich einen veränderlichen Widerstand auf. Letzterer dient zur Aufheizung eines Abschaltheissleiters (dieser ist parallel zum Ladewiderstand und zum Triggerkondensator angeordnet) und unterstützt damit dessen Wirkungsweise. Der veränderliche Widerstand kann z.B. ein Steuerkondensator (frequenzabhängig) oder ein spannungsabhängiger Widerstand sein. Parallel zum Triac ist ausserdem ein Entstörkondensator geschaltet, der in einer Schaltungsausführung für schwerer zündende Leuchtstofflampen aus einem kapazitiven Spannungsteiler besteht, wobei einer der Kondensatoren von einer selbstschaltenden Vierschichtdiode überbrückt ist. Diese Schaltung ist hinsichtlich der verwendeten Bauelemente relativ aufwendig. Sie schaltet sich ausserdem bei Nichtzünden der Niederdruckentladungslampe ab, sobald das Hochlaufen der Spannung abgeschlossen ist, und ermöglicht so keine weiteren Zündversuche.

Aufgabe der Erfindung ist es, eine Zündvorrichtung zu schaffen, mit deren Hilfe eine schnelle, sichere und schonende Zündung von insbesondere schwierig zu zündenden Niederdruckentladungslampen zu erreichen ist. Unter schwierig zu zündenden Entladungslampen fallen speziell die in den letzten Jahren verstärkt entwickelten kompakten Niederdruckentladungslampen. Ausserdem sollte die Zündvorrichtung aus möglichst wenigen Bauteilen bestehen, so dass diese auf kleinstem Raum untergebracht werden kann. In diesem Fall ergibt sich die Möglichkeit, die Schaltung in der kompakten Niederdruckentladungslampe zu integrieren.

Die Zündvorrichtung mit den im Oberbegriff des Hauptanspruchs genannten Merkmalen ist erfindungsgemäss dadurch gekennzeichnet, dass der Spannungsteiler kapazitiver Art ist und nur aus zwei gleich grossen Kondensatorblöcken besteht, wobei das Kapazitätsverhältnis eines Kondensatorblocks zum Triggerkondensator zwischen 1:1 und 1:5 liegt und der aus Ladewiderstand und Triggerkondensator bestehende Triggerkreis eine Zeitkonstante zwischen 1 und 8 ms besitzt.

Der jeweilige Kondensatorblock kann dabei aus einem oder aus einer Reihenschaltung von mehreren Kondensatoren bestehen. Gleich gross bedeutet, dass die Kenndaten der beiden Kondensatorblöcke übereinstimmen sollten. Die tatsächlichen Kapazitätswerte dürfen jedoch mit den üblichen Toleranzen behaftet sein.

Durch diesen Schaltungsaufbau wird eine Zündschaltung gebildet, die ein schnelles Aufheizen der Elektroden durch einen hohen Vorheizstrom und eine anschliessende sichere Zündung durch hohe Spannungsspitzen in beiden Richtungen erreicht. Diese Schaltung aus verhältnismässig wenigen Bauteilen wiederholt kontinuierlich das Hochlaufen der Spannung. Sie benötigt keine Vierschichtdiode, um zu höheren Stossspannungen zu kommen, denn es hat sich überraschenderweise gezeigt, dass sich mit dieser Schaltungsanordnung auch ohne transformatorische Überhöhung schon bei kleinen Kapazitäten (ca. 5 nF) für den Spannungsteiler mindestens das 1,4fache des Scheitelwertes der Versorgungsspannung erreichen lässt.

Das Kapazitätsverhältnis einer Spannungsteilerkapazität zur Triggerkapazität zwischen 1:1 und 1:5 ist notwendig, um die höheren Stossspannungen zu erzielen. Insbesondere hat sich ein Kapazitätsverhältnis von 1:3 als günstig erwiesen.

Die oben aufgeführte Zeitkonstante des Triggerkreises garantiert, dass eine genügend hohe Ansprechspannung bzw. Nichtwiederschliessspannung des Triacs vorhanden ist, wie sie zum Starten von schwierig zu zündenden Niederdruckentladungslampen benötigt wird. In Versuchsschaltungen hat sich eine Zeitkonstante zwischen 4 und 6 ms als optimal herausgestellt.

Durch Fertigungstoleranzen der Schaltungselemente kann in extremen Fällen eine polaritätsabhängige Lampenzündung auftreten. Damit dieses auf jeden Fall unterbleibt und die Schaltung ein sicheres Kippverhalten mit gleich hohen Stossspannungen in beiden Polaritäten zeigt, ist zwischen dem Diac und dem Triggerkondensator eine Parallelschaltung aus einer Diode mit beliebiger Durchlassrichtung und einem Widerstand angeordnet.

Um ein Zerstören des Triacs durch einen zu schnellen Stromanstieg zu verhindern, ist in den Hauptstromkreis der Zündvorrichtung mit dem Triac eine Hochfrequenzdrossel eingebaut, die eine Herabsetzung der Stromanstiegsgeschwindigkeit bewirkt.

Ausserdem weist der Hauptstromkreis einen Kaltleiter auf, der bei einer nicht mehr zündenden Lampe den Startvorgang innerhalb von 60 s unterbricht.

Bei dieser Schaltungsanordnung wird der sonst übliche Entstörkondensator parallel zum Hauptstromkreis überflüssig, da der kapazitive Spannungsteiler diese Funktion mitübernimmt. Um jedoch die nach IEC-Vorschrift 155 geforderte Gesamtkapazität von 5 bis 20 nF für den Spannungsteiler zu erreichen, muss die Kapazität jedes Kondensatorblocks zwischen 10 und 40 nF liegen.

Die Erfindung wird anhand der nachfolgenden Schaltungsanordnungen näher erläutert.

Fig. 1 zeigt den Schaltungsaufbau einer erfindungsgemässen Zündvorrichtung für eine Niederdruckentladungslampe.

Fig. 2 zeigt eine Erweiterung des Schaltungsaufbaus gemäss Fig. 1.

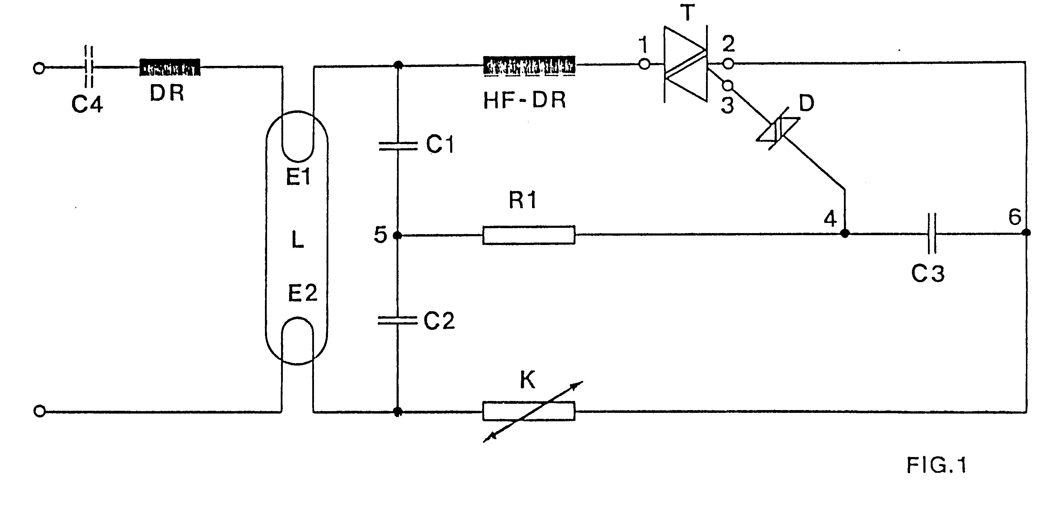

In Fig. 1 ist eine Zündvorrichtung für eine kompakte Leuchtstofflampe L von 16 W mit aufheizbaren Elektroden E1, E2 und einer in Reihe liegenden Vorschaltanordnung aus Drossel DR sowie eventuell Kondensator C4 gezeigt, bei der parallel zur Lampe L ein Triac T mit einer Spitzensperrspannung von 700 V, belastbar mit einem Strom von 3 A, liegt. Mit 1, 2 sind die beiden Hauptelektrodenanschlüsse des Triacs T bezeichnet. Der Steuerelektrodenanschluss 3 des Triacs T ist über einen Diac D mit einer Kippspannung von 32 V, einen Verbindungspunkt 4 und einen Ladewiderstand R1 von 68 KΩ an den Mittenabgriff 5 eines ebenfalls parallel zur Lampe L verlaufenden Spannungsteilers aus zwei Kondensatoren C1, C2 von je 22 nF geführt. Ausserdem ist der Diac D über den Verbindungspunkt 4, einen Triggerkondensator C3 von 68 nF und einen Verbindungspunkt 6 mit dem Hauptelektrodenanschluss 2 des Triacs T verbunden. Im Hauptstromkreis des Triacs T liegt ausserdem eine Hochfrequenzdrossel HF-DR von 47 μH und ein Abschaltkaltleiter K mit einem Nennwiderstand von 25 Ω.

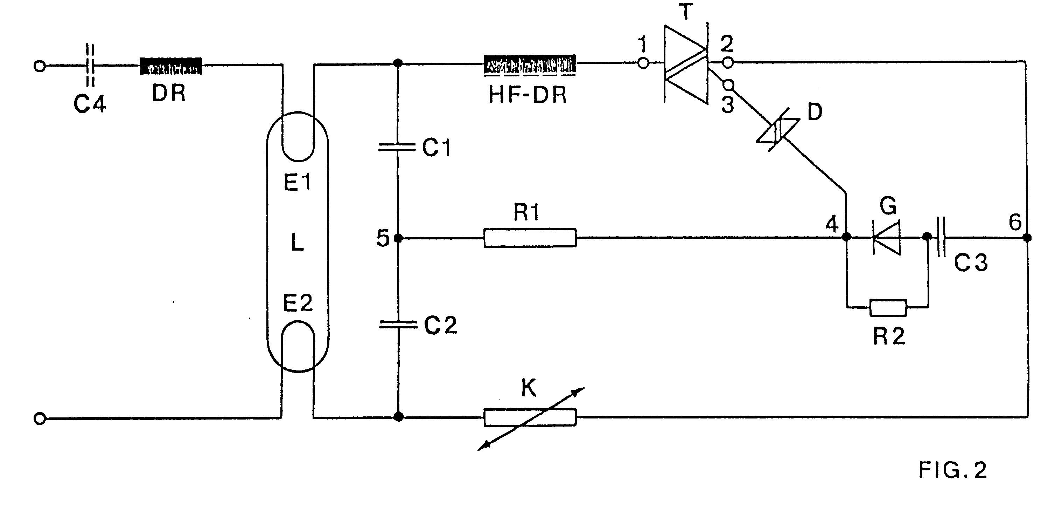

Bei dem erweiterten Schaltungsaufbau der erfindungsgemässen Zündvorrichtung in Fig. 2 ist ausser den schon in Fig. 1 aufgeführten Schaltungselementen zwischen dem Verbindungspunkt 4 und dem Triggerkondensator C3 eine Parallelschaltung aus einer Diode G und einem Widerstand R2 von 56 Ω eingesetzt. Die Durchlassrichtung der Diode G ist dabei beliebig.

Die Funktion der Zündvorrichtung, die ihre Eigenschaften insbesondere durch ein asymmetrisches instabiles Verhalten erhält, lässt sich folgendermassen beschreiben:

Die nach dem Einschalten am kapazitiven Spannungsteiler anliegende 50-Hz-Versorgungsspannung wird entsprechend dem Kapazitätsverhältnis C1/C2 von 1:1 halbiert. Wird die Versorgungsspannung langsam erhöht, so schaltet der Diac, sobald der Triggerkondensator die Schaltspannung des Diacs erreicht, den Triac durch. Ob hierbei zuerst die negative oder positive Seite des Diacs durchschaltet, hängt vom Einschaltaugenblick, den Kapazitätstoleranzen und den Unterschieden der Schaltspannung des Diacs in positiver und negativer Richtung ab. Nach dem ersten Durchschalten wird der kapazitive Spannungsteiler und Vorwiderstand aus Ladewiderstand und Triggerkondensator niederohmig. Infolge der grossen Ladezeitkonstante ist ein Durchschalten in Gegenrichtung nicht möglich, es kommt wieder zum Durchschalten in der gleichen Richtung, da die zum Laden des Triggerkreises erforderliche Energie hierbei geringer ist. Dadurch ergibt sich der erwünschte hohe Vorheizstrom bei induktiver Schaltung.

Dieser Steuerzustand ist jedoch nicht stabil, da sich die Potentialverhältnisse am Spannungsteiler durch ungleiche Energieentnahme ändern, bis ein Durchschalten in Gegenrichtung möglich wird. Anschliessend kippt das Spannungsverhältnis wieder um, so dass sich der Vorgang wiederholen kann. Durch dieses Kippverhalten mit Stossspannungserzeugung nach beiden Polaritäten wird die Lampenzündung stark begünstigt, wobei die Spannungsspitzen gleich hoch sind.

Bei der erfindungsgemässen Zündvorrichtung ändert sich ausserdem der Anschnittswinkel laufend in einem bestimmten Rhythmus, z.B. bei Ausführung mit obigen Kenndaten mit ca. 3 Hz. Genauso ändert sich sodann sowohl der Vorheizstrom als auch die Stossspannung, so dass ein Nichtzünden der Lampen automatisch vermieden wird.

**Patentansprüche**

1. Zündvorrichtung für eine Niederdruckentladungslampe (L), bei der parallel zur Lampe (L) und in Reihe zu den vorheizbaren Elektroden (E1, E2) ein Triac (T) angeschlossen ist, dessen Steuerelektrodenanschluss (3) über einen Diac (D) und einen dazu in Reihe liegenden Ladewiderstand (R1) an den Mittenabgriff (5) eines ebenfalls parallel zur Lampe (L) verlaufenden Spannungsteilers geführt ist und der Diac (D) ausserdem über einen Triggerkondensator (C3) mit dem Hauptelektrodenanschluss (2) des Triacs (T) verbunden ist, dadurch gekennzeichnet, dass der Spannungsteiler kapazitiver Art ist und nur aus zwei gleich grossen Kondensatorblöcken (C1, C2) besteht, wobei das Kapazitätsverhältnis eines Kondensatorblocks (C1 bzw. C2) zum Triggerkondensator (C3) zwischen 1:1 und 1:5 liegt und der aus Ladewiderstand (R1) und Triggerkondensator (C3) bestehende Triggerkreis eine Zeitkonstante zwischen 1 und 8 ms besitzt.

2. Zündvorrichtung nach Anspruch 1, dadurch gekennzeichnet, dass das Kapazitätsverhältnis eines Kondensatorblocks (C1 bzw. C2) zum Triggerkondensator (C3) 1:3 ist.

3. Zündvorrichtung nach Anspruch 1, dadurch gekennzeichnet, dass der aus Ladewiderstand (R1) und Triggerkondensator (C3) bestehende Triggerkreis eine Zeitkonstante zwischen 4 und 6 ms besitzt.

4. Zündvorrichtung nach Anspruch 1, dadurch gekennzeichnet, dass zwischen dem Diac (D) und dem Triggerkondensator (C3) eine Parallelschaltung aus einer Diode (G) mit beliebiger Durchlassrichtung und einem Widerstand (R2) angeordnet ist.

5. Zündvorrichtung nach Anspruch 1, dadurch gekennzeichnet, dass im Hauptstromkreis in Reihe zum Triac (T) eine Hochfrequenzdrossel (HF-DR) liegt.

6. Zündvorrichtung nach Anspruch 1, dadurch gekennzeichnet, dass im Hauptstromkreis in Reihe zum Triac (T) ein Kaltleiter (K) liegt.

## Claims

1. An ignition circuit for a low-pressure discharge lamp (L) in which a triac (T) is connected in parallel with the lamp (L) and in series with the preheatable electrodes (E1, E2), the control electrode terminal (3) of the triac is connected – via a diac (D) and a charge resistor (R1) serially connected therewith – to the center junction (5) of a voltage divider also connected in parallel with the lamp (L), and the diac (D) is further connected via a trigger capacitor (C3) to the main electrode terminal (2) of the triac (T), wherein the voltage divider is a capacitive voltage divider and comprises only two capacitor units (C1, C2) of equal value, with the relationship of the capacity value of one capacitor unit (C1, C2) to the capacity value of the trigger capacitor (C3) being between 1:1 and 1:5, and the trigger circuit composed of charge resistor (R1) and trigger capacitor (C3) having a time constant of between 1 and 8 milliseconds.

2. An ignition circuit according to claim 1, wherein the relationship of the capacity value of one capacitor unit (C1, C2) to the capacity value of the trigger capacitor (C3) is 1:3.

3. An ignition circuit according to claim 1, wherein the trigger circuit composed of the charge resistor (R1) and the trigger capacitor (C3) has a time constant of between 4 and 6 milliesconds.

4. An ignition circuit according to claim 1, wherein a parallel circuit composed of a diode (G) of random polarization and a resistor (R2) is connected between the diac (D) and the trigger capacitor (C3).

5. An ignition circuit according to claim 1, wherein a high-frequency choke (HF-DR) is connected in the main circuit in series with the triac (T).

6. An ignition circuit according to claim 1, wherein a PTC-resistor (K) is connected in the main circuit in series with the triac (T).

## Revendications

1. Dispositif d'allumage pour une lampe à décharge à basse pression (L), dans lequel un triac (T) est connectée en parallèle avec la lampe (L) et en série avec les électrodes susceptibles d'être préchauffées (E1, E2), triac dont la borne de gâchette (3) est reliée à travers un diac (D) et une résistance de charge (R1), montée en série avec lui, à la prise médiane (5) d'un diviseur de tension, monté également en parallèle avec la lampe (L), le diac (D) étant relié, en outre, à travers un condensateur de déclenchement (C3), à la borne d'une électrode principale (2) du triac (T), caractérisé en ce que le diviseur de tension est de type capacitif et est constitué seulement de deux blocs condensateurs (C1, C2) d'égale grandeur, le rapport de capacités d'un bloc condensateur (C1 ou C2) au condensateur de déclenchement (C3) étant compris entre 1:1 et 1:5 et le circuit de déclenchement, formé de la résistance de charge (R1) et du condensateur de déclenchement (C3), possédant une constante de temps entre 1 et 8 ms.

2. Dispositif selon la revendication 1, caractérisé en ce que le rapport de capacité d'un bloc condensateur (C1 ou C2) au condensateur de déclenchement (C3) est de 1:3.

3. Dispositif selon la revendication 1, caractérisé en ce que le circuit de déclenchement, formé de la résistance de charge (R1) et du condensateur de déclenchement (C3), possède une constante de temps entre 4 et 6 ms.

4. Dispositif selon la revendication 1, caractérisé par la disposition, entre le diac et le condensateur de déclenchement (C3), du montage en parallèle d'une diode (G) et d'une résistance (R2), le sens passant de la diode étant sans importance.

5. Dispositif selon la revendication 1, caractérisé en ce qu'une self-inductance à haute fréquence (HF-DR) est disposée dans le circuit principal, en série avec le triac (T).

6. Dispositif selon la revendication 1, caractérisé en ce qu'un thermistor (K) est disposé dans le circuit principal, en série avec le triac (T).

FIG.1

C4 DR HF-DR T D R1 C1 C2 C3 K E1 E2 L

0 120 405

FIG. 2